# EUROPÄISCHE PATENTANMELDUNG

(11) **EP 4 074 495 A1**
(43) Veröffentlichungstag der Anmeldung: **19.10.2022**
(21) Anmeldenummer: 22167368.4
(22) Anmeldetag: 08.04.2022
(51) Int. Cl.: B29C 70/30, B29C 70/54, B26D 5/00, B26F 1/38, G06F 30/20, G06F 113/26, G06F 113/24

(54) **VERFAHREN ZUM HERSTELLEN VON VERBUNDBAUTEILEN MIT EINER NICHT-ABWICKELBAREN OBERFLÄCHE**

(30) Priorität: 16.04.2021 DE 102021109699
(71) Anmelder: Airbus Operations GmbH, 21129 Hamburg (DE)
(72) Erfinder: KERGER, Sebastian, 21129 Hamburg (DE); SCHRÖDER, René, 21129 Hamburg (DE); SCHUBERT, Konstantin, 21129 Hamburg (DE)

(57) **Zusammenfassung**

Um bei Verbundbauteilen (10) mit nicht-abwickelbaren Oberflächen die Toleranzen bei der Fertigung besonders großer Bauteile einhalten zu können, wird erfindungsgemäß vorgeschlagen, einen Zuschnittrohling (18) auf einem Formwerkzeug (16) zu drapieren und die Abweichung (26) der Zuschnittrohlingskante (20) von der Soll-Zuschnittkante (22) zu bestimmen. Sodann wird auf Basis der Abweichung (26) eine neue Zuschnittrohlingskante (22) errechnet und ein neuer Zuschnittrohling (18) erstellt und zur Kontrolle wieder drapiert. Das Verfahren wird so lange wiederholt, bis die Abweichungen (26) unter einem tolerierbaren Schwellwert liegen. Das Verfahren wird ferner für jede Textillage (12) des Verbundbauteils (10) durchgeführt.

## Beschreibung

Die Erfindung betrifft verschiedene Verfahren, die bei der Herstellung von Verbundbauteilen mit nicht-abwickelbaren Oberflächen durchgeführt werden.

Für den Stand der Technik wird auf US 2015 / 0 231 835 A1, US 4 534 813 A, US 9 694 546 B2, US 10 062 202 B2, US 8 647 545 B2, US 9 180 625 B2, WO 2013 138 015 A1, EP 2 804 730 B1 und US 9 399 325 B2 verwiesen.

Nicht-abwickelbare Oberflächen, auch doppelt gekrümmte Oberflächen genannt, können nicht ohne Verzerrung von ihrer 3D-Form auf eine 2D-Fläche transformiert werden. Verbundbauteile mit solcher Formgebung werden daher in der Regel mittels Advanced-Fiber-Placement-Verfahren oder in gewissen Grenzen auch mittels Drapierverfahren hergestellt. Maßgeblich dafür, ob eine nicht-abwickelbare Oberfläche mit letzterem Verfahren herstellbar ist, sind die Toleranzen hinsichtlich Faservolumengehalt und/oder Geometrie. Dabei tritt bei Bauteilen, die innerhalb keine Rampen aufweisen, diese lediglich an Kanten oder lediglich an Bereichen haben, die ohnehin bei der Endkonturfertigung entfernt werden, in der Regel kein Problem aufgrund der nicht-abwickelbaren Oberfläche auf.

Bei den hierin diskutierten Bauteilen ist jedoch die Toleranz hinsichtlich Faservolumengehalt oder Geometrie so eng gesetzt, dass die herkömmlichen Verfahren nicht mehr ausreichen. Dies tritt insbesondere wegen hoher Faservolumengehalte oder auch im Fall von Rampen oder Dickenänderungen bei dem Bauteil auf.

Der Erfindung liegt die Aufgabe zugrunde, die Herstellung von Verbundbauteilen mit nicht-abwickelbaren Oberflächen zu verbessern.

Die Aufgabe wird durch den Gegenstand der unabhängigen Ansprüche gelöst. Bevorzugte Weiterbildungen sind Gegenstand der abhängigen Ansprüche.

Die Erfindung schafft ein Verfahren zum Ermitteln von Zuschnittdaten, auf deren Basis das Zuschneiden eines textilen Flächengebildes durchführbar ist, um eine zugeschnittene Textillage zu erhalten, die für die Herstellung eines aus Textillagen gebildeten Verbundbauteils mit einer nicht-abwickelbaren Oberfläche angepasst ist, wobei das Zuschnittverfahren umfasst:
a) Bereitstellen eines textilen Flächengebildes als ein Zuschnittrohling, der wenigstens eine Zuschnittrohlingskante aufweist
b) Drapieren des Zuschnittrohlings auf einem Formwerkzeug oder vorhergehendem Zuschnittrohling, das für die Herstellung des Verbundbauteils angepasst ist;
c) Ermitteln einer Abweichung des sich aus Schritt b) ergebenden Verlaufs der Zuschnittrohlingskante und eines durch die nicht-abwickelbare Oberfläche vorgegebenen Verlaufs von Soll-Zuschnittkanten;
d) wenn das Ausmaß der in Schritt c) ermittelten Abweichung über einem vorgegebenen Schwellwert liegt: Verändern des Verlaufs der Zuschnittrohlingskante auf Basis der in Schritt c) ermittelten Abweichung und wiederholen der Schritte b) bis d),
   andernfalls Speichern des Verlaufs der Zuschnittrohlingskante für diesen Zuschnittrohling als Zuschnittdaten und Anordnen des Zuschnittrohlings auf dem Formwerkzeug oder dem vorhergehendem Zuschnittrohling.

Es ist bevorzugt, dass in Schritt a) der Zuschnittrohling aus dem textilen Flächengebilde wie bei einer abwickelbaren Oberfläche zugeschnitten wird.

Es ist bevorzugt, dass in Schritt a) der Zuschnittrohling durch ein textiles Flächengebilde gebildet ist, das in Bezug auf ein Formwerkzeug, das für die Herstellung des Verbundbauteils angepasst ist, Übergröße hat.

Es ist bevorzugt, dass in Schritt c) die Abweichung mit Hilfe eines Messrasters und/oder einer Soll-Zuschnittkante ermittelt wird, die auf den Zuschnittrohling projiziert werden.

Es ist bevorzugt, dass in Schritt c) die Abweichung mit Hilfe einer Bildaufnahme oder eines 3D-Scans des Zuschnittrohlings und einer entsprechenden Auswertung ermittelt wird.

Es ist bevorzugt, dass in Schritt d) der Verlauf der Zuschnittrohlingskante verändert wird, indem ein weiterer Zuschnittrohling anhand des geänderten Verlaufs der Zuschnittrohlingskante zugeschnitten wird.

Es ist bevorzugt, dass die Schritte a) bis d) für jede Textillage des Verbundbauteils durchgeführt werden.

Es ist bevorzugt, dass die Schritte a) bis d) für jede Textillage des Verbundbauteils durchgeführt werden, die lediglich einen Teil des Verbundbauteils abdecken, innerhalb des Verbundbauteils beginnen oder enden, und/oder nicht in der Nähe des für einen Beschnitt vorgesehenen Bauteilrandes beginnen oder enden.

Die Erfindung schafft ein Verfahren zum Zuschneiden eines textilen Flächengebildes, um eine zugeschnittene Textillage zu erhalten, die für die Herstellung eines aus Textillagen gebildeten Verbundbauteils mit einer nicht-abwickelbaren Oberfläche angepasst ist, wobei das Verfahren umfasst:
a) Durchführen eines zuvor beschriebenen Verfahrens, um Zuschnittdaten zu erhalten; und
b) Zuschneiden des textilen Flächengebildes anhand der Zuschnittdaten, um die zugeschnittene Textillage zu erhalten.

Die Erfindung schafft ein Verfahren zum Herstellen eines aus Textillagen gebildeten Verbundbauteils mit einer nicht-abwickelbaren Oberfläche, wobei das Verfahren umfasst:
a) Durchführen eines zuvor beschriebenen Verfahrens;
b) Drapieren zugeschnittener Textillagen auf dem Formwerkzeug, um einen aus Textillagen gebildeten Bauteilvorläufer zu erhalten;
c) Durchführen eines Spritzpressverfahrens mit geschlossener Form oder eines Vakuumverfahrens mit einem Vakuumsack, um aus dem Bauteilvorläufer das Verbundbauteil zu bilden.

Die vorliegende Erfindung wird für die Herstellung großer, komplexer Teile benötigt, die nicht-abwickelbare (doppelt gekrümmte) Schalen und innenliegende Rampen aufweisen und die entweder in einem geschlossenen Formverfahren (z.B. RTM) oder in einem Verfahren hergestellt werden sollen, das lokale Drückstücke an den Rampen aufweist, die der Kontur des Teils folgen sollen. Weiterhin sollen die betreffenden Teile aus zweidimensionalen Textilien (z.B. Geweben oder Gelegen) hergestellt werden. Der Bedarf für die skizzierte Neuerung ist besonders groß, wenn die involvierten Rampen relativ steil sind (1:20 oder steiler) oder wenn die auf das Teil bezogenen Toleranzanforderungen eng sind hinsichtlich akzeptabler Abweichungen des lokalen Faservolumenanteils. Alle diese Punkte sind bei großen Verbundstoffteilen in der Luft- und Raumfahrt, die auf minimales Gewicht ausgelegt sind, häufig.

Große Verbundstoffteile in der Luft- und Raumfahrt werden in der Regel aus Prepregs hergestellt. Ein alternatives Verfahren ist die Herstellung der Teile mit trockenen Textilien und einer Injektions- oder Infusionstechnologie. Es gibt verschiedene Methoden, von denen Methoden mit geschlossenen Formen (z.B. RTM oder SQ-RTM) die besten Ergebnisse in Bezug auf die Wiederholbarkeit der hergestellten Dicken und Oberflächenqualitäten bieten.

Der übliche Ansatz für die Herstellung dieser Teile (verkürzt auf die relevantesten Schritte) ist:
- Entwickeln von 3D-Lagen zu 2D-Zuschnitten (wird einmal pro Teiletyp durchgeführt, der Rest wird für jedes Teil durchgeführt)
- Schneiden von Lagen aus 2D-Textilien
- Drapieren der Lagen über eine Hälfte der Form (oder ein spezielles Drapierwerkzeug)
- Schließen der Form (inkl. Kernplatzierungen etc. und/oder Positionierung der Formteile bei einseitigen Werkzeugen)
- Infusion oder Injektion des trockenen Textils
- Aushärtungs-Zyklus
- Entformung
- Zerstörungsfreie Prüfung (ZFP)

Der erste Arbeitsschritt - das Schneiden von Lagen aus 2D-Textilien - ist das Ziel der vorliegenden Erfindung. Wenn die Form, zu der die Lagen geformt werden sollen, einfach ist (wie z.B.: abwickelbare Oberflächen), ist die Definition der Konturen für das 2D-Schneiden einfach.

Wenn die Oberflächen nicht-abwickelbar sind, erfordert die Definition der Konturen eine Vorhersage des Drapierprozesses des Textils, der notwendig ist, um die Lagen zu einer nicht-abwickelbaren Oberfläche zu formen. Dies beinhaltet eine (lokale) Scherung und/oder Dehnung des Materials, die oft von den Materialeigenschaften abhängt und stark nichtlinear sein kann.

Handelsübliche Werkzeuge wie Catia oder Hyperworks bieten Ansätze zur Automatisierung dieser Prozesse und zur Vorhersage der richtigen Formen für die 2D-Schnitte. Für Teile ohne interne Rampen ist dies weitgehend unproblematisch: Die Lagen können größer als nötig definiert und nach dem Legen entlang der Teilekanten korrigiert werden. Wenn das Teil jedoch interne Rampen und/oder Lagenüberhänge aufweist, wird dies komplexer.

Abhängig vom Textiltyp und der Oberflächenkomplexität wird das Drapieren nichtlinear, abhängig von den Materialeigenschaften und der Reihenfolge des Drapierens. Zusätzliche Komplexität ergibt sich aus den gewünschten Faserorientierungen, die berücksichtigt werden müssen, und aus Effekten wie der Faltenbildung nach eines bestimmten Scherausmaßes. Diese Effekte zusammengenommen bedeuten, dass es eigentlich nicht richtig möglich ist, die abgeflachte Form des Teils ohne ein gewisses Maß an Unsicherheiten/Toleranzen vorherzusagen, die sich aus der Komplexität des Prozesses ergeben.

Wenn ein großer Aufwand in die Materialcharakterisierung und die Modellierung des Drapierprozesses gesteckt wird, kann man davon ausgehen, dass dieser Fehler recht klein werden kann - für Werkzeuge von der Stange wurde festgestellt, dass er im Bereich von >10mm Abweichung zwischen vorhergesagter und erhaltener drapierter Form für große (~2×1m²) und stark gebogene Teile liegt.

Dies ist leicht durch die beteiligten Geometrien erklärbar: ein Fehler von nur 0,1° für vorhergesagte Orientierungen an einer 2m langen Kante ergibt etwa 3,5mm Abweichung am Ende einer solchen Geometrie. An der Außenkante des Teils wäre eine solche Abweichung nicht besonders kritisch. Bei internen Rampen usw. wird dies jedoch zu einem größeren Thema.

Bei internen Rampen kann bereits eine kleine Abweichung zu einem ungleichmäßigen Faservolumengehalt (FVC) aufgrund der diskreten Natur der Lagen führen. Rampen und Toleranzen sollten so gewählt werden, dass sie zu akzeptablen Abweichungen führen. Dies wird entscheidend, wenn die Lagenpositionen nicht mit den vorgesehenen Positionen übereinstimmen. Beispielsweise kann eine Lage bei einem bestimmten Querschnitt etwas größer sein als vorgesehen, was eine lokale Erhöhung der FVC verursacht.

Dies ist zwar an sich nicht zu bemängeln, kann aber dennoch leicht entscheidend werden. Für den Beispielfall (2 Lagen über die gesamte Länge) kann, wenn eine einzelne Lage so viel länger ist, dass sie den Rand der vorgesehenen Rampe erreicht, eine lokale Erhöhung des Faservolumenanteils um 50% erfolgen.

Bei 60% nominalem FVC, wie er in vielen Teilen der Luft- und Raumfahrt zu finden ist, würde dies zu 90% lokalem FVC führen. Ein solch hoher FVC kann nicht mehr in geschlossener Form hergestellt werden - denn das Werkzeug würde einfach nicht schließen. Wenn die Haut lokal dicker ist, kann der Effekt immer noch zu einer lokalen FVC außerhalb der Toleranzen führen und/oder zu einer starken Beeinflussung der lokalen Permeabilitäten, was die Füllung der Struktur beeinflusst und zu einer nicht stabilen Fließfrontentwicklung von Teil zu Teil führen kann.

Als Gegenmaßnahme weisen Rampen bislang einen geringen Winkel (z.B. <<1:10) auf, um den Einfluss der Variabilität der Lagenkanten zu verringern. Ferner könnten die FVC-Toleranzen erhöht werden- beide Punkte sind jedoch aus der Kosten- und Leichtbausicht unerwünscht und können die Designfreiheit für solche Teile einschränken. Es sollte beachtet werden, dass derartige Maßnahmen, wie geringe Winkel und dergleichen, mit zunehmender Bauteilgröße und Bauteilkrümmung ihre Effektivität einbüßen und bei der Abwicklung der Fehler dennoch auf inakzeptable Ausmaße ansteigen kann.

Es wird daher eine Lösung vorgeschlagen, die die Herstellung solcher Teile ermöglicht, während die beteiligten Lagenformen (in 2D geschnitten) auf eine Toleranz korrigiert werden können, die deutlich enger ist als diejenige, die mit Hilfe von Software nach dem Stand der Technik erreicht werden kann.

Die hier beschriebene Idee betrifft Teile mit (relativ) steilen inneren Rampen und/oder Lagenüberhängen, wobei die einzelnen Lagenschnitte so korrigiert werden können, dass ein solches Teil in einem Werkzeug realisiert werden kann, das beide Seiten der Rampe definiert (z.B. geschlossene Form für RTM-Fertigung oder offene Form mit Druckstücken) für Infusionsprozesse.

Der Hauptprozess für die Teileherstellung kann grundsätzlich unverändert bleiben - vor der ersten Herstellung der Teile wird eine Korrekturschleife implementiert, die das 2D-Schneiden & 3D-Drapieren jeder einzelnen Lage innerhalb der erforderlichen Toleranzen ermöglicht. Dies vermeidet Qualitätsprobleme, die von einem totalen Produktionsausfall (Werkzeug kann nicht schließen) bis hin zu Abweichungen der lokalen FVC reichen und ermöglicht die Verwendung steilerer (interner) Rampen und/oder Lagengefälle bei der Herstellung mit geschlossenen "harten" Formen oder ähnlichen Verfahren.

Der skizzierte Fertigungsansatz für komplexe Verbundstoffteile mit trockenen Geweben war:
- Abwickeln von 3D-Lagen zu 2D-Zuschnitten (wird einmal pro Teiletyp durchgeführt, der Rest wird für jedes Teil durchgeführt)
- Schneiden von Lagen aus 2D-Textilien
- Drapieren der Lagen über eine Hälfte der Form (oder ein spezielles Drapierwerkzeug)
- Schließen der Form (inkl. Kernplatzierungen etc. und/oder Positionierung der Formteile bei einseitigen Werkzeugen)
- Infusion oder Injektion des trockenen Textils
- Aushärtungszyklus
- Entformung
- Zerstörungsfreie Prüfung (ZFP)

Es wird vorgeschlagen, den ersten Schritt wie folgt zu erweitern, um Unsicherheiten und Unzulänglichkeiten bestehender

### Abwicklungsvorhersagewerkzeuge zu berücksichtigen:

Abgewickelte Lagen werden geschnitten; alternativ wird die ursprüngliche Ansicht der abgewickelten Lagen durch einfaches Drapieren eines deutlich überdimensionierten Gewebes/Materials auf der Drapierform ersetzt. Es sollte beachtet werden, dass der gewählte Drapierprozess soweit wie möglich dem späteren Herstellungsprozess folgt. Vorallem bei Doppelkrümmung kann das genaue Vorgehen beim Drapieren beispielsweise durch Änderungen an der Drapierabfolge (also von welchem Punkt auf dem Textil aus wird drapiert, in welche Richtungen Scherung ins Material eingebracht wird) die Endform beeinflussen.

Die Abweichung der Lagenkanten von den vorgesehenen Kanten (z. B. Rampen usw.) wird gemessen.

Die Messung kann bevorzugt gegen eine Laserprojektion der vorgesehenen Lagenkante und ein Messgitter erfolgen. Die Messungen können gegen eine andere Art von Referenz durchgeführt werden, z.B. Markierungen auf dem Werkzeug, äußere Werkzeugkante, bestimmte Lehren usw. Die Messungen können auch automatisiert mittels Bildanalyse, 3D-Scanning oder ähnlichen Ansätzen durchgeführt werden.

Die 2D-Schnittdefinitionskanten werden dann um die gemessenen Abweichungen verschoben. Die genaue Arbeitsweise ist abhängig vom Messansatz im vorherigen Schritt:
Wenn z. B. ein Messraster verwendet wurde, werden Korrekturen an den Punkten des Messrasters vorgenommen und Korrekturwerte dazwischen geschätzt, z. B. durch lineare Approximation oder durch Definition eines Splines auf Basis der gemessenen Punkte oder durch eine Mittelungsmethode über mehrere Punkte etc.

Wenn die gesamte Kante z. B. durch 3D-Scannen oder Bildanalyse gemessen wurde, kann die Korrektur auf die gesamte Kante angewendet werden. Dieser Prozess wird so oft wiederholt, bis die akzeptablen Toleranzen zwischen der beabsichtigten und der erhaltenen drapierten 3D-Lagenform erreicht sind. Die verbleibenden Toleranzen (und das Design der Rampen usw.) berücksichtigen, dass eine hunderprozentige Wiederholbarkeit nicht undbedingt gegeben ist.

Dieser Prozess wird für alle Lagen des Teils wiederholt. Es können einfache Lagen in Bereichen mit geringer Krümmung von diesem Prozess ausgenommen werden. Ferner können Lagen, die bis auf einen kleinen Versatz (z. B. an einer Rampe) die gleiche Kontur haben, von den gleichen Korrekturen erfasst werden.

Besonders bevorzugt werden die Korrekturschleifen unter Berücksichtigung des Einflusses der vorhergehenden Lagen durchgeführt. Nachdem dies alles durchgeführt wurde, werden die korrigierten 2D-Abwicklungen geschnitten und der "normale" Fertigungsprozess für das Bauteil (und alle folgenden Teile mit gleichem Aufbau) kann gestartet werden, wobei die verbleibenden minimalen nicht korrigierbaren Abweichungen als Differenz / effektive Streuung verbleiben.

Es sollte beachtet werden, dass der skizzierte Prozess aufgrund der verbleibenden Streuung die Konstruktionsregeln erleichtert (z.B. können Rampen mit einem höheren Winkel gefertigt werden), aber dennoch sollte bei der Konstruktion darauf geachtet werden, dass minimale Abweichungen der Lagenkanten keine inakzeptablen Auswirkungen auf die innere Bauteilqualität haben (z.B. sind harte 90°-Rampen in komplexen Doppelkrümmungsteilen immer noch schwierig, wenn das Teil dünn ist).

Ausführungsbeispiele werden anhand der beigefügten schematischen Zeichnungen näher erläutert. Darin zeigt:
- Fig. 1: ein Beispiel einer Rampe mit unterschiedlichen Textillagen;
- Fig. 2: eine Perspektivansicht eines Zuschnittrohlings drapiert auf einem Formwerkzeug;
- Fig. 3: eine Darstellung einer Messung der Abweichung der Zuschnittrohlingskanten von den Soll-Zuschnittkanten; und
- Fig. 4: eine Darstellung einer Veränderung des Verlaufs der Zuschnittrohlingskante.

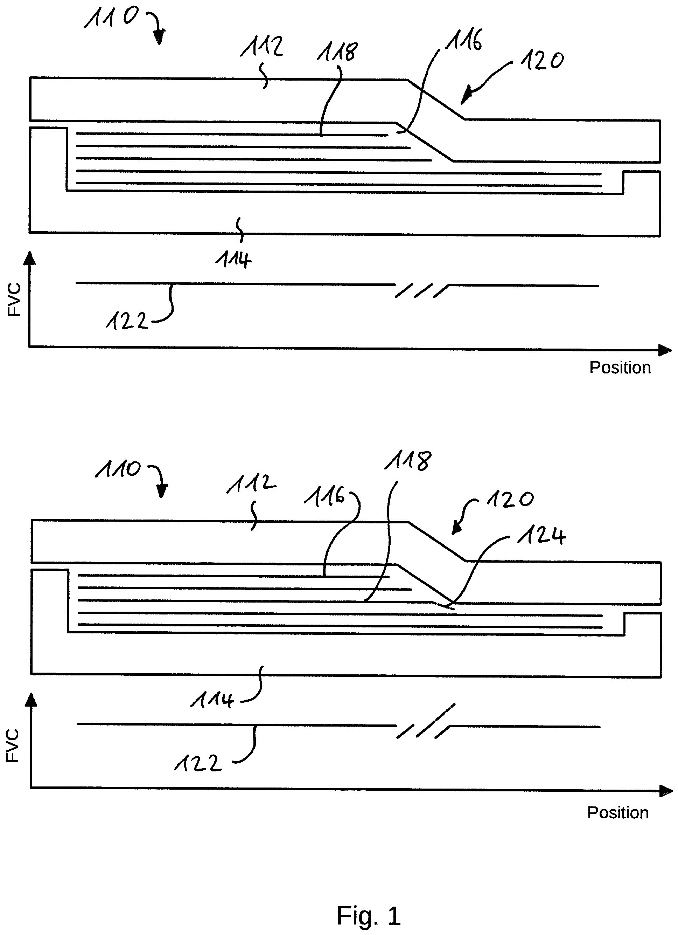

Es wird zunächst auf die Fig. 1 Bezug genommen, anhand der das der Erfindung zugrunde liegende Problem näher erläutert werden soll. Die Fig. 1 zeigt ein zweiteiliges Formwerkzeug 110. Die Werkzeughälften 112, 114 umgeben einen Formraum 116. Darin sind eine Mehrzahl von Textillagen 118 aus textilem Flächengebilde angeordnet. Das daraus zu bildende Bauteil soll in einem Bereich eine Rampe 120 aufweisen. Die an die Rampe 120 angrenzenden Textillagen 118 sind idealerweise so geschnitten, dass sie beim Aufeinanderlegen dem Verlauf der Rampe 120 folgen (Fig. 1, oben). Daraus ergibt sich entlang des horizontalen Verlaufs der Textillagen 118 (Position) ein gewisser Faservolumengehalt (FVC), der in den Diagrammen dargestellt ist. Der FVC entspricht einem nominalen FVC 122 und fällt im Bereich der Rampe 120 etwas geringer aus. In dieser Situation können die Werkzeughälften 112, 114 geschlossen werden und die Textillagen 118 können auf an sich bekannte Art mit Harz versehen und ausgehärtet werden.

Anders ist es beispielsweise, wenn wie in Fig. 1 unten dargestellt eine der Textillagen 118 einen übergroßen Bereich 124 aufweist. In diesem Fall steigt im Bereich der Rampe 120 der FVC über den nominalen FVC 122 an, was in der Regel dazu führt, dass das Formwerkzeug 110 nicht mehr geschlossen werden kann.

Ferner ist es möglich, dass eine der Textillagen 118 kürzer ausgebildet ist, sodass sich ein gewisser Überhang der darüber liegenden Textillage 118 ausbildet. In diesem Fall sinkt der FVC wiederrum unter den nominalen FVC 122 ab und kann anderweitig kompensiert werden.

Ziel der im weiteren beschriebenen Verfahren ist es, insbesondere die zuvor genannten Situationen möglichst gut zu vermeiden.

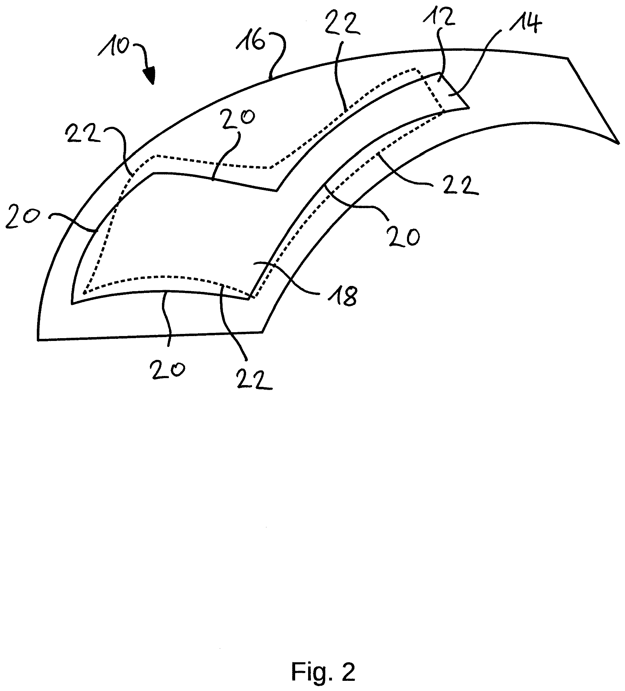

Es wird nachfolgende auf die Fig. 2 bis 4 Bezug genommen, die schematisch einzelne Stationen eines Verfahrens zur Herstellung eines Verbundbauteils 10 mit nicht-abweickelbarer Oberfläche zeigen. Nicht-abwickelbare Oberflächen weisen eine doppelte Krümmung in einem Ausmaß auf, das eine herkömmliche Fertigung innerhalb vorgegebener Toleranzen nicht mehr zulässt.

Das Verbundbauteil 10 ist vorzugsweise ein Luftfahrzeugverbundbauteil, das für ein Luftfahrzeug angepasst ist. Beispiele für solche Luftfahrzeugverbundbauteile sind das hintere Druckschott und die Flügelspitzen, insbesondere mit Sharklets. Als Flügelspitze werden meist die letzten 4 bis 5 Meter des Flügels in Richtung außenbords angesehen.

Das Verbundbauteil 10 ist aus einer Mehrzahl von Textillagen 12 aufgebaut. Die Textillagen 12 sind textile Flächengebilde und können beispielsweise Prepregs, Gewebe oder Gelege sein.

Das textile Flächengebilde 14 wird zunächst zugeschnitten, indem auf eine herkömmliche Methode zurückgegriffen wird. Dabei kann das 2D-Schnittmuster für das Flächengebilde 14 durch handelsübliche CAD-Software errechnet werden. Um jedoch innerhalb vorgegebener Toleranzen zu bleiben, ist die nachfolgende erfindungsgemäße Verfeinerung erforderlich:
Das Flächengebilde 14 wird zunächst auf einem Formwerkzeug 16 als Zuschnittrohling 18 drapiert. Der Zuschnittrohling 18 weist wenigstens eine Zuschnittrohlingskante 20 auf. Aufgrund der Eigenschaften von nicht-abwickelbaren Oberflächen, wird der Verlauf der Zuschnittrohlingskante 20 nicht dem Verlauf der Soll-Zuschnittkante 22 entsprechen. Die Soll-Zuschnittkante 22 gibt an, wo die Zuschnittrohlingskante 20 verlaufen soll, damit nach dem Drapieren des Zuschnittrohlings 18 die gewünschte Geometrie innerhalb der Toleranzgrenzen verwirklicht ist.

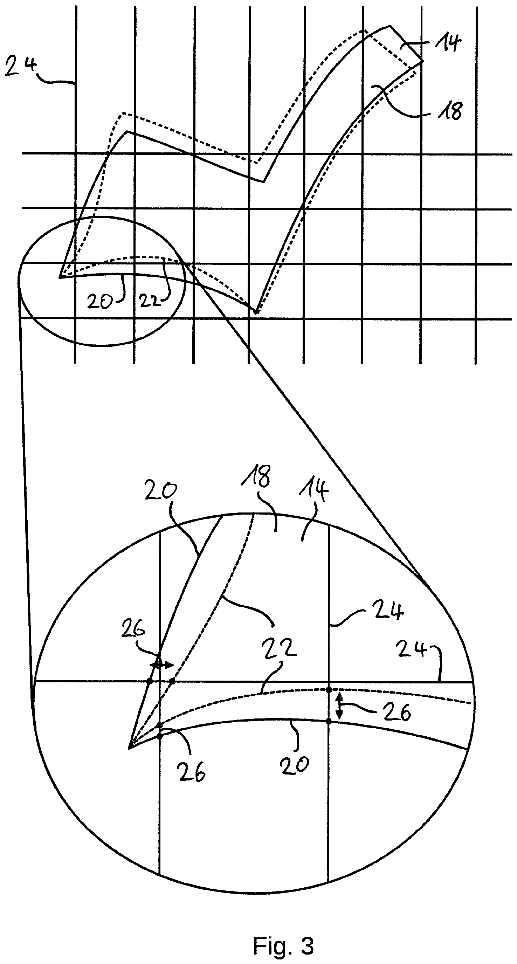

Sodann wird, wie in Fig. 3 näher dargestellt, die Abweichung der Zuschnittrohlingskante 20 von der Soll-Zuschnittkante 22 gemessen. In einem Fall kann dies durch eine Laserprojektion der Soll-Zuschnittkante 22 und eines Messrasters 24 erfolgen. Die Abweichungen 26 der Zuschnittrohlingskante 20 und der Soll-Zuschnittkante 22 kann beispielsweise punktweise von Hand gemessen werden.

Bevorzugt ist es jedoch, dass die Messung der Zuschnittrohlingskante 20 automatisch beispielsweise mit Hilfe eines Bildauswerteverfahrens oder auf Basis eines Laserscans erfolgt. Die zur Kantenbestimmung und Abstandsbestimmung erforderlichen Verfahren sind an sich auf anderen Gebieten gut bekannt.

Wenn das Ausmaß der ermittelten Abweichungen 26 über einem vorgegeben Schwellwert liegt, wird der Verlauf der Zuschnittrohlingskante 20 verändert. Das Ausmaß der Abweichungen 26 kann beispielsweise mittels Gradientenverfahren oder ähnlicher Verfahren ermittelt werden.

Somit lässt sich aus den Abweichungen 26 eine Korrektur 28 für jeden gemessenen Punkt der Zuschnittrohlingskante 20 ermitteln.

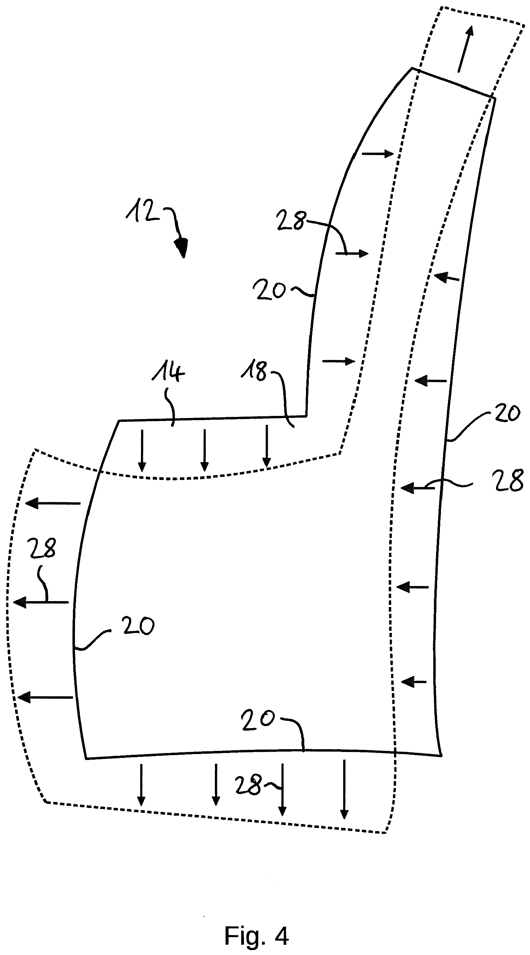

Wie näher in Fig. 4 dargestellt, wird die Zuschnittrohlingskante 20 anhand der Abweichungen 26 beziehungsweise der daraus berechneten Korrektur 28 verändert. Es ergibt sich ein neuer Verlauf der Zuschnittrohlingskante 20.

Sodann wird ein neuer Zuschnittrohling 18 der neuen Zuschnittrohlingskante 20 erstellt und wiederrum auf dem Formwerkzeug 16 oder gegebenenfalls einem vorhergehenden Zuschnittrohling 18 drapiert. Sodann wird wiederrum die Abweichung 26 des Verlaufs der Zuschnittrohlingskante 20 von der Soll-Zuschnittkante 22 ermittelt.

Wenn das Ausmaß der Abweichungen 26 unter dem vorgegeben Schwellwert liegt, verbleibt der Zuschnittrohling 18 auf dem Formwerkzeug 16 beziehungsweise einem vorhergehenden Zuschnittrohling 18. Die Zuschnittdaten, die angegeben, welchen Verlauf die Zuschnittrohlingskante 20 nimmt, werden für diese bestimmte Textillage 12 gespeichert und können sodann für die weitere Produktion verwendet werden.

Das Verfahren wird für jede Textillage 12, die das Verbundbauteil 10 enthält, durchgeführt.

Insgesamt ergibt sich somit auf iterative Weise und Lage für Lage eine 2D-Zuschnittform, die beim Drapieren auf dem Formwerkzeug 16 innerhalb der vorgegebenen Toleranzen ein Verbundbauteil 10 schaffen können.

In der Massenproduktion werden die textilen Flächengebilde 14 anhand der für jede Schicht des Verbundbauteils 10 ermittelten Zuschnittdaten zugeschnitten und sodann auf dem Formwerkzeug 16 drapiert.

Das Formwerkzeug 16 kann Teil eines geschlossenen Formprozesses, wie etwa Spritzpressen (Resin-Transfer-Molding, RTM) sein, es kann aber auch in Verbindung mit einem Vakuumsackverfahren gegebenenfalls unter Verwendung von Druckstücken, erfolgen.

Um bei Verbundbauteilen 10 mit nicht-abwickelbaren Oberflächen die Toleranzen bei der Fertigung besonders großer Bauteile einhalten zu können, wird erfindungsgemäß vorgeschlagen, einen Zuschnittrohling 18 auf einem Formwerkzeug 16 zu drapieren und die Abweichung 26 der Zuschnittrohlingskante 20 von der Soll-Zuschnittkante 22 zu bestimmen. Sodann wird auf Basis der Abweichung 26 eine neue Zuschnittrohlingskante 22 errechnet und ein neuer Zuschnittrohling 18 erstellt und zur Kontrolle wieder drapiert. Das Verfahren wird so lange wiederholt, bis die Abweichungen 26 unter einem tolerierbaren Schwellwert liegen. Das Verfahren wird ferner für jede Textillage 12 des Verbundbauteils 10 durchgeführt.

### Bezugszeichenliste:

- 10: Verbundbauteil
- 12: Textillage
- 14: Flächengebilde
- 16: Formwerkzeug
- 18: Zuschnittrohling
- 20: Zuschnittrohlingskante
- 22: Soll-Zuschnittkante
- 24: Messraster
- 26: Abweichung
- 28: Korrektur

- 110: Formwerkzeug
- 112: Werkzeughälfte
- 114: Werkzeughälfte
- 116: Formraum
- 118: Textillage
- 120: Rampe
- 122: nominale FVC
- 124: übergroßer Bereich

## Patentansprüche

1. Verfahren zum Ermitteln von Zuschnittdaten, auf deren Basis das Zuschneiden eines textilen Flächengebildes (14) durchführbar ist, um eine zugeschnittene Textillage (12) zu erhalten, die für die Herstellung eines aus Textillagen (12) gebildeten Verbundbauteils (10) mit einer nicht-abwickelbaren Oberfläche angepasst ist, wobei das Zuschnittverfahren umfasst:
a) Bereitstellen eines textilen Flächengebildes (14) als ein Zuschnittrohling (18), der wenigstens eine Zuschnittrohlingskante (20) aufweist;
b) Drapieren des Zuschnittrohlings auf einem Formwerkzeug (16) oder vorhergehendem Zuschnittrohling (18), das für die Herstellung des Verbundbauteils (10) angepasst ist;
c) Ermitteln einer Abweichung (26) des sich aus Schritt b) ergebenden Verlaufs der Zuschnittrohlingskante (20) und eines durch die nicht-abwickelbare Oberfläche vorgegebenen Verlaufs von Soll-Zuschnittkanten (22);
d) wenn das Ausmaß der in Schritt c) ermittelten Abweichung (26) über einem vorgegebenen Schwellwert liegt: Entfernen des Zuschnittrohlings und Verändern des Verlaufs der Zuschnittrohlingskante (20) auf Basis der in Schritt c) ermittelten Abweichung (26) und wiederholen der Schritte b) bis d),
andernfalls Speichern des Verlaufs der Zuschnittrohlingskante (20) für diesen Zuschnittrohling (18) als Zuschnittdaten und Verbleibenlassen des Zuschnittrohlings auf dem Formwerkzeug (16) oder dem vorhergehendem Zuschnittrohling (18).

2. Verfahren nach Anspruch 1, wobei in Schritt a) der Zuschnittrohling (18) aus dem textilen Flächengebilde (14) wie bei einer abwickelbaren Oberfläche zugeschnitten wird.

3. Verfahren nach einem der vorhergehenden Ansprüche, wobei in Schritt a) der Zuschnittrohling (18) durch ein textiles Flächengebilde (14) gebildet ist, das in Bezug auf ein Formwerkzeug (16), das für die Herstellung des Verbundbauteils (10) angepasst ist, Übergröße hat.

4. Verfahren nach einem der vorhergehenden Ansprüche, wobei in Schritt c) die Abweichung (26) mit Hilfe eines Messrasters und/oder einer Soll-Zuschnittkante (22) ermittelt wird, die auf den Zuschnittrohling (18) projiziert werden.

5. Verfahren nach einem der vorhergehenden Ansprüche, wobei in Schritt c) die Abweichung (26) mit Hilfe einer Bildaufnahme oder eines 3D-Scans des Zuschnittrohlings und einer entsprechenden Auswertung ermittelt wird.

6. Verfahren nach einem der vorhergehenden Ansprüche, wobei in Schritt d) der Verlauf der Zuschnittrohlingskante (20) verändert wird, indem ein weiterer Zuschnittrohling anhand des geänderten Verlaufs der Zuschnittrohlingskante (20) zugeschnitten wird.

7. Verfahren nach einem der vorhergehenden Ansprüche, wobei in Schritt d) der Verlauf der Zuschnittrohlingskante (20) verändert wird, indem der Zuschnittrohling anhand des geänderten Verlaufs der Zuschnittrohlingskante (20) weiter beschnitten wird.

8. Verfahren nach einem der vorhergehenden Ansprüche, wobei die Schritte a) bis d) für jede Textillage (12) des Verbundbauteils (10) durchgeführt werden.

9. Verfahren zum Zuschneiden eines textilen Flächengebildes (14), um eine zugeschnittene Textillage (12) zu erhalten, die für die Herstellung eines aus Textillagen (12) gebildeten Verbundbauteils (10) mit einer nicht-abwickelbaren Oberfläche angepasst ist, wobei das Verfahren umfasst:
a) Durchführen eines Verfahrens nach einem der vorhergehenden Ansprüche, um Zuschnittdaten zu erhalten; und
b) Zuschneiden des textilen Flächengebildes (14) anhand der Zuschnittdaten, um die zugeschnittene Textillage (12) zu erhalten.

10. Verfahren zum Herstellen eines aus Textillagen gebildeten Verbundbauteils (10) mit einer nicht-abwickelbaren Oberfläche, wobei das Verfahren umfasst:
a) Durchführen eines Verfahrens nach Anspruch 9;
b) Drapieren zugeschnittener Textillagen auf dem Formwerkzeug (16), um einen aus Textillagen gebildeten Bauteilvorläufer zu erhalten;
c) Durchführen eines Spritzpressverfahrens mit geschlossener Form oder eines Vakuumverfahrens mit einem Vakuumsack, um aus dem Bauteilvorläufer das Verbundbauteil (10) zu bilden.
